# FASCICULE DE BREVET EUROPEEN

(11) **EP 2 867 832 B1**
(45) Date de publication et mention de la délivrance du brevet: **17.08.2016**
(21) Numéro de dépôt: 13744631.6
(22) Date de dépôt: 26.06.2013
(51) Int. Cl.: H01Q 7/00, G06K 19/077

(54) **SYSTEME D'ANTENNE POUR MICROCIRCUIT SANS CONTACT**
ANTENNENSYSTEM FÜR BERÜHRUNGSLOSE MIKROSCHALTUNG
ANTENNA SYSTEM FOR CONTACTLESS MICROCIRCUIT

(30) Priorité: 02.07.2012 FR 1201865
(43) Date de publication de la demande: 06.05.2015
(73) Titulaire: Inside Secure, 13590 Meyreuil (FR)
(72) Inventeur: CHARRAT, Bruno, F-13090 Aix en Provence (FR); PIC, Pierre, F-13600 Ceyreste (FR)
(74) Mandataire: de Roquemaurel, Bruno
(86) Numéro de dépôt international: PCT/FR2013/051487
(87) Numéro de publication internationale: WO 2014/006300

(56) Documents cités:
- EP-A1- 1 031 939
- WO-A1-02/11061
- US-A- 5 955 723

## Description

La présente invention concerne les microcircuits ou circuits intégrés sans contact, et en particulier les microcircuits intégrés dans un objet tel qu'une carte en plastique (résine polymère).

Les microcircuits sans contact ou à champ proche NFC (Near Field Communication) ont été développés pour pouvoir réaliser des transactions avec un terminal, par couplage inductif ou par couplage de champ électrique.

Pour réaliser une communication par couplage inductif notamment, un facteur de couplage inductif suffisant doit être obtenu entre une bobine d'antenne du terminal et une bobine d'antenne connectée au microcircuit. Ce facteur de couplage dépend des tailles respectives des bobines d'antenne du terminal et du microcircuit, et de la distance et des positions relatives de ces deux bobines. Plus la bobine du microcircuit présente une taille proche de celle du terminal, plus le facteur de couplage entre les deux bobines peut être élevé.

Généralement, les bobines d'antenne des terminaux présentent des dimensions supérieures à celles d'une carte au format ISO 7816. Il est donc souhaitable que la bobine d'antenne du microcircuit soit la plus grande possible. Cependant, plus la taille de cette bobine est grande par rapport au microcircuit, plus il est difficile de réaliser une connexion entre la bobine et le microcircuit, qui soit fiable et suffisamment solide pour résister à une manipulation fréquente. Dans le cas des cartes à microcircuit sans contact, les cartes sont réalisées en résine polymère, généralement en PVC Polychlorure de vinyle), PET (Polytéréphtalate d'éthylène), ou PC (polycarbonate), et sont donc déformables. Il s'avère que des déformations répétées de la carte peuvent conduire à la rupture de la connexion entre la bobine et le microcircuit, ce qui met le microcircuit définitivement hors d'usage.

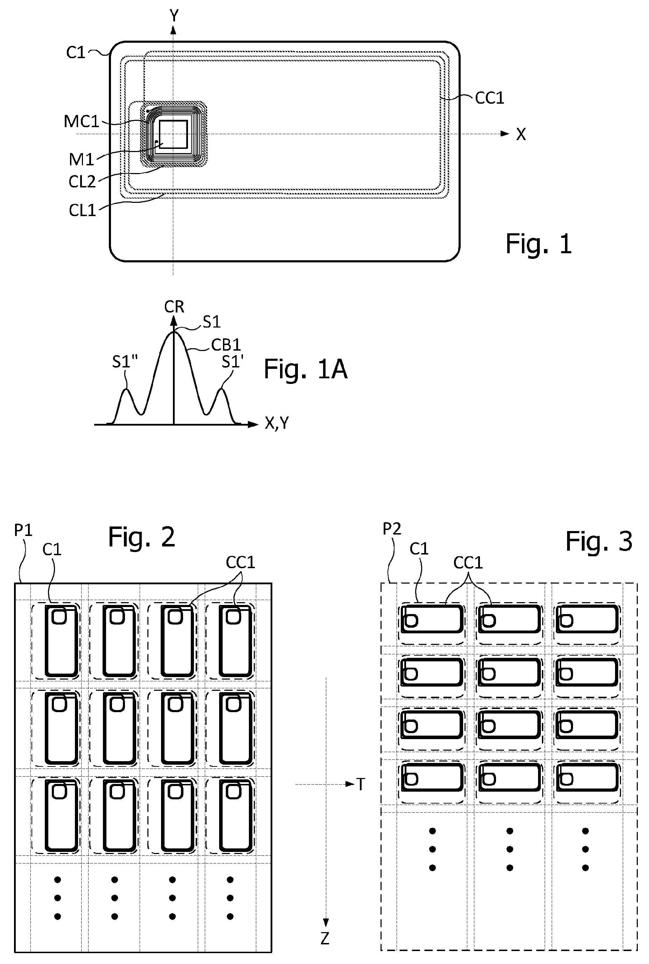

Le brevet US 5 955 723 propose de réaliser un couplage inductif entre une grande bobine formée sur la carte, et une petite bobine connectée au microcircuit. La grande bobine comporte une petite boucle ayant sensiblement les dimensions de la bobine du microcircuit. Le couplage inductif est réalisé en faisant coïncider le centre de la bobine du microcircuit avec celui de la petite boucle. La qualité des transmissions entre ces deux bobines d'antenne est mesurée par un facteur de couplage inductif. La figure 1 représente une telle carte à microcircuit C1. La carte à microcircuit C1 comprend une bobine d'antenne CC1 et un microcircuit M1 connecté à une bobine d'antenne MC1. Les bobines d'antenne MC1 et CC1 comportent plusieurs spires. La bobine d'antenne CC1 comprend une grande boucle présentant sensiblement les dimensions de la carte C1 et une petite boucle CL1 présentant sensiblement les dimensions de la bobine MC1.

Il s'avère que le facteur de couplage inductif entre la petite boucle de la grande bobine et la bobine du microcircuit est très sensible à la précision de l'alignement du centre de la petite boucle avec celui de la bobine du microcircuit. Le moindre écart de cet alignement entraine une détérioration importante de ce facteur de couplage. La figure 1A représente une courbe CB1 de variation de ce facteur de couplage CR en fonction de la position de la bobine MC1 par rapport à la boucle CL1 le long d'un axe transversal X ou longitudinal Y de la carte, passant par le centre de la boucle CL1. La courbe CB1 montre que lorsque la bobine MC1 est parfaitement centrée sur la boucle CL1, le facteur de couplage CR entre les deux bobines MC1 et CC1 est maximum (à un sommet principal SI), et que lorsque la bobine MC1 est décentrée de la boucle CL1, ce facteur chute fortement et rapidement. La courbe CB1 présente également des sommets secondaires SI', S1" apparaissant lorsque la bobine MC1 se trouve complètement en dehors de la boucle CL2, mais avec une partie (horizontale ou verticale sur la figure 1A) en regard de la boucle.

Or la fabrication d'une telle carte à microcircuit est généralement réalisée collectivement, en plusieurs étapes comportant des étapes de formation de bobines d'antenne de carte dans une plaque, et des étapes de découpe de la plaque pour individualiser les cartes. Des modules associant chacun un microcircuit et une bobine d'antenne sont implantés dans les cartes individualisées. Les figures 2 et 3 représentent une telle plaque, avant qu'elle soit découpée pour individualiser les cartes. Les figures 2 et 3 représentent une plaque P1, P2 de forme rectangulaire, comprenant des bobines d'antenne CC1 réparties en rangées selon la largeur de la plaque (suivant un axe T) et en colonnes selon la longueur de la plaque (suivant un axe Z). Les figures 2 et 3 montrent également en traits interrompus les contours des cartes. Sur la figure 2, la plaque P1 comprend quatre bobines CC1 par rangée, disposées de manière à former quatre cartes C1 par rangée, la longueur des cartes étant orientée suivant l'axe Z. Sur la figure 3, la plaque P2 comprend trois bobines CC1 par rangée, disposées de manière à former trois cartes C1 par rangée, la longueur des cartes étant orientée suivant l'axe T. Des marges sont prévues entre les cartes et entre les cartes et les bords de la plaque P1, P2. Une fois que les bobines d'antenne CC1 sont formées, la plaque P1, P2 est prédécoupée d'abord par des lignes de prédécoupe orientées suivant l'axe T, puis des lignes de prédécoupe orientées suivant l'axe Z, généralement par emboutissage.

Si la précision de la découpe de la plaque P1, P2 est suffisante suivant l'axe T, elle s'avère insuffisante suivant l'axe Z. En effet, la précision de découpe suivant l'axe T atteint couramment ±0,5 mm, tandis que la précision de découpe suivant l'axe Z ne peut guère être réduite en dessous de ±1,5 mm. Il en résulte une variation dans la position de la bobine d'antenne CC1 par rapport aux bords de chaque carte C1. Lorsque le microcircuit M1 et sa bobine d'antenne MC1 sont insérés dans chaque carte, les cartes ont été individualisées et la bobine d'antenne CC1 n'est plus visible. Le microcircuit M1 est implanté dans chaque carte en y formant une cavité. La position de la cavité est déterminée par rapport aux bords de chaque carte, et il n'est alors pas possible de localiser facilement l'antenne de la carte.

Il en résulte une variation qui peut atteindre 3 mm (suivant l'axe longitudinal ou transversal de la carte) dans le positionnement de la bobine MC1 du microcircuit M1, par rapport à la petite boucle CL1 de la bobine CC1 formée dans la carte. Dans une chaine de fabrication produisant de grandes quantités de cartes à microcircuit, cette variation de positionnement entraine une variation importante du facteur de couplage inductif CR entre la bobine CC1 et la bobine MC1 du microcircuit, d'une carte à une autre. Cette variation de facteur de couplage inductif intervient soit suivant l'axe transversal Y de la carte (cas de la figure 2), soit suivant l'axe longitudinal X de la carte (cas de la figure 3). Cette variation de facteur de couplage inductif nécessite, en fin de chaine de fabrication, la mise en place de mesures de ce facteur de couplage, et conduit à la mise au rebut d'importantes quantités de cartes à microcircuit, pour ne conserver que des cartes ayant sensiblement un facteur de couplage inductif donné. Il en résulte une augmentation sensible du coût de fabrication d'une telle carte à microcircuit.

Il est donc souhaitable de réduire le taux de cartes à microcircuit sans contact mises au rebut en fin de fabrication. A cet effet, il peut être souhaitable d'homogénéiser le facteur de couplage entre les bobines d'antenne de la carte et du microcircuit lors d'une fabrication collective de cartes à microcircuit.

Des modes de réalisation concernent un procédé de fabrication d'une carte à microcircuit, comprenant des étapes consistant à : former une première bobine d'antenne dans une carte, la première bobine d'antenne comportant une partie suivant le bord de la carte, former un module comportant un microcircuit et une seconde bobine d'antenne disposée autour et connectée au microcircuit, et implanter le module dans la carte en une position précise par rapport au bord de la carte, la première bobine d'antenne étant couplée par induction à la seconde bobine d'antenne. La première bobine d'antenne est conformée de manière à ce que seulement une partie de la seconde bobine d'antenne soit à une distance de la première bobine d'antenne inférieure à 5% de la largeur de la seconde bobine d'antenne.

Selon un mode de réalisation, la première bobine d'antenne est formée par dépôt et gravure d'une couche électriquement conductrice, ou deux couches électriquement conductrices séparées par une couche électriquement isolante.

Selon un mode de réalisation, la première bobine d'antenne est formée en implantant un fil isolé dans la carte à l'aide d'ultrasons.

Selon un mode de réalisation, la première bobine d'antenne comprend une grande boucle conformée pour suivre partiellement le bord de la carte, et une petite boucle comprenant deux premières parties opposées suivant seulement une partie du bord de la seconde bobine d'antenne à une distance inférieure à 5% de la largeur de la seconde bobine d'antenne, et deux secondes parties opposées espacées l'une de l'autre d'une distance supérieure d'au moins 20% à la distance entre les premières parties opposées.

Selon un mode de réalisation, la première bobine d'antenne comprend deux branches parallèles situées à une distance de la seconde bobine d'antenne inférieure à 5% de la largeur de la seconde bobine d'antenne.

Selon un mode de réalisation, la première bobine d'antenne comprend une autre partie susceptible d'être situé à une distance de la seconde bobine d'antenne inférieure à 5% de la largeur de la seconde bobine d'antenne, compte tenu d'une marge d'erreur dans le positionnement des première et seconde bobines d'antenne, l'une par rapport à l'autre.

Selon un mode de réalisation, la première bobine d'antenne comprend deux branches adjacentes, susceptibles d'être à une distance de la seconde bobine d'antenne inférieure à 5% de la largeur de la seconde bobine d'antenne, compte tenu d'une marge d'erreur dans le positionnement des première et seconde bobines d'antenne, l'une par rapport à l'autre.

Selon un mode de réalisation, le procédé comprend une étape de formation d'un condensateur d'accord de la première bobine d'antenne, le condensateur d'accord comprenant deux parties d'extrémité de fil ou de piste conductrice formant la bobine d'antenne, disposées en regard l'une de l'autre, soit à l'intérieur, soit à l'extérieur de la première bobine d'antenne.

Des modes de réalisation concernent également un procédé de fabrication collective de cartes à microcircuit, comprenant plusieurs exécutions du procédé tel que précédemment défini, pour former plusieurs antennes de carte sur une plaque, et une étape de découpage de la plaque pour obtenir des cartes comportant chacune une bobine d'antenne de carte, l'étape d'implantation d'un microcircuit avec sa bobine d'antenne étant effectuée dans chaque carte une fois individualisée.

Selon un mode de réalisation, les antennes de carte sont réparties dans la plaque en rangées et en colonnes, de plusieurs antennes de carte.

Des modes de réalisation concernent également une carte à microcircuit comprenant : une carte, une première bobine d'antenne implantée dans la carte, et comportant une partie suivant le bord de la carte, et un module comprenant un microcircuit et une seconde bobine d'antenne disposée autour et connectée au microcircuit, le module étant implanté dans la carte en une position précise par rapport au bord de la carte. La première bobine d'antenne est conformée de manière à ce que seulement une partie de la seconde bobine d'antenne soit à une distance de la première bobine d'antenne inférieure à 5% de la largeur de la seconde bobine d'antenne.

Selon un mode de réalisation, la première bobine d'antenne comprend une grande boucle conformée pour suivre partiellement le bord de la carte, et une petite boucle comprenant deux premières parties opposées suivant seulement une partie du bord de la seconde bobine d'antenne à une distance inférieure à 5% de la largeur de la seconde bobine d'antenne, et deux secondes parties opposées espacées l'une de l'autre d'une distance supérieure d'au moins 20% à la distance entre les premières parties opposées.

Selon un mode de réalisation, la première bobine d'antenne comprend deux branches parallèles situées à une distance de la seconde bobine d'antenne inférieure à 5% de la largeur de la seconde bobine d'antenne.

Selon un mode de réalisation, la première bobine d'antenne comprend une autre partie susceptible d'être une distance de la seconde bobine d'antenne inférieure à 5% de la largeur de la seconde bobine d'antenne, compte tenu d'une marge d'erreur dans le positionnement des première et seconde bobines d'antenne, l'une par rapport à l'autre.

Selon un mode de réalisation, la première bobine d'antenne comprend deux branches adjacentes, susceptibles d'être à une distance de la seconde bobine d'antenne inférieure à 5% de la largeur de la seconde bobine d'antenne, compte tenu d'une marge d'erreur dans le positionnement des première et seconde bobines d'antenne, l'une par rapport à l'autre.

Selon un mode de réalisation, la carte à microcircuit comprend un condensateur d'accord de la première bobine d'antenne, le condensateur d'accord comprenant deux parties d'extrémité de fil ou de piste conductrice formant la bobine d'antenne, disposées en regard l'une de l'autre, soit à l'intérieur, soit à l'extérieur de la première bobine d'antenne.

Des exemples de réalisation de l'invention seront décrits dans ce qui suit, à titre non limitatif en relation avec les figures jointes parmi lesquelles :
la figure 1 décrite précédemment, représente schématiquement une carte à microcircuit, selon l'art antérieur,
la figure 1A décrite précédemment, représente une courbe de variation du facteur de couplage inductif entre des bobines d'antenne de la carte et du microcircuit sans contact,
les figures 2 et 3 décrites précédemment, représentent des plaques dans lesquelles sont formées collectivement plusieurs cartes à microcircuit sans contact,
les figures 4 et 5 représentent des cartes à microcircuit sans contact, selon différents modes de réalisation,
les figures 6A, 6B représentent des courbes de variation du facteur de couplage entre les bobines d'antenne de la carte et du microcircuit de la figure 4 ou 5,
les figures 7 à 10 représentent des cartes à microcircuit sans contact, selon d'autres modes de réalisation,
les figures 11A, 11B représentent des courbes de variation du facteur de couplage entre les bobines d'antenne de la carte et du microcircuit de la figure 7, 8, 9 ou 10,
les figures 12 et 13 représentent des plaques dans lesquelles sont formées collectivement plusieurs cartes à microcircuit sans contact,
Les figures 14 à 16 représentent des parties de carte à microcircuit sans contact, selon d'autres modes de réalisation.

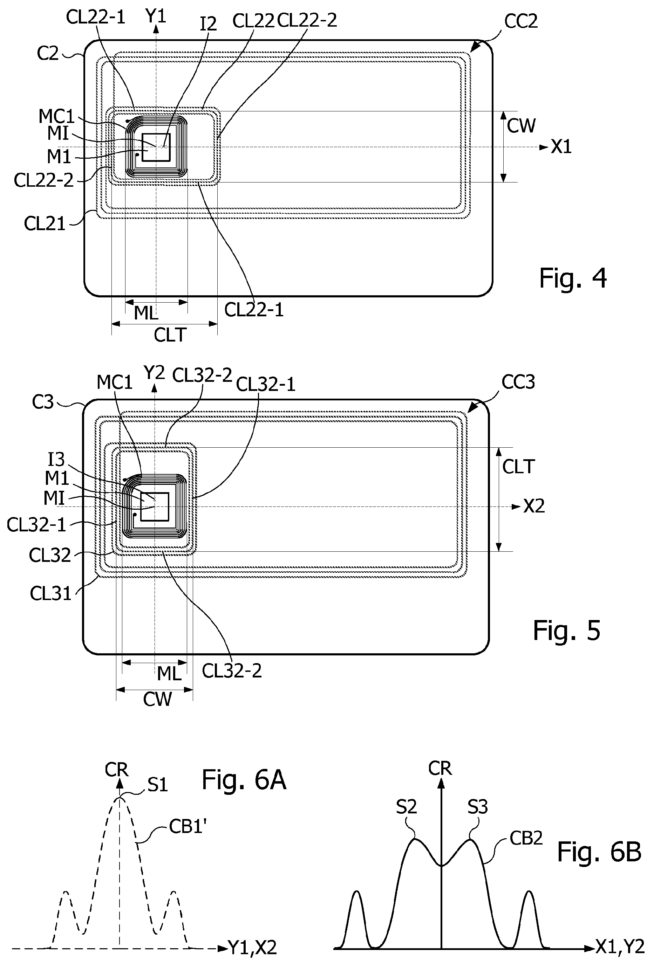

Les figures 4 et 5 représentent une carte à microcircuit sans contact C2, C3 comprenant une bobine d'antenne CC2, CC3 et un module comprenant un microcircuit M1 et une bobine d'antenne MC1 disposée autour du microcircuit et connectée à ce dernier. Ici, le terme "autour" ne signifie pas que le microcircuit M1 et la bobine MC1 sont nécessairement dans un même plan. Les bobines CC2 ou CC3 et MC1 comprennent plusieurs spires, par exemple de 2 à 4 pour la bobine CC2 ou CC3 et de 5 à 10 pour la bobine MC1. La bobine CC2 ou CC3 forme une grande boucle CL21 ou CL31 et une petite boucle CL22 ou CL32. La grande boucle CL21, CL31 suit le bord de la carte C2, C3, ou seulement une partie de ce bord comme illustré par la figure 1. La grande boucle peut ainsi approcher le bord de la carte à une distance minimum pouvant atteindre 2 à 3 mm. La bobine d'antenne MC1 peut être disposée en regard de la boucle CL22, CL32. Dans ce cas, les bobines MC1 et CC2, CC3 sont implantées dans la carte C2, C3 à des profondeurs différentes. La bobine d'antenne MC1 peut également être entourée par la boucle CL22, CL32. Dans ce cas, les bobines MC1 et CC2, CC3 peuvent également être implantées dans la carte C2, C3 à des profondeurs différentes. La bobine MC1 présente une forme ronde ou carrée avec des angles arrondis.

Selon un mode de réalisation, la boucle CL22, CL32 présente une forme allongée dont la longueur CLT, suivant un axe X1 ou Y2, est supérieure de 20 à 50% à la largeur CW de la boucle, suivant un axe X2 ou Y1. La largeur CW de la boucle CL22, CL32 est comprise entre 1 et 1,1 fois la largeur extérieure ML de la bobine MC1. Ici, X1 et Y1 désignent les axes longitudinal et transversal de la carte C1, et X2 et Y2 désignent les axes longitudinal et transversal de la carte C2. Ainsi, les plus grands côtés CL22-1, CL32-1 sont situés à une distance de la bobine MC1, inférieure à 5% de la largeur ML de la bobine MC1. La longueur CLT de la boucle CL22, CL32 peut correspondre à la somme de la largeur ML de la bobine MC1 et d'une marge d'erreur dans le positionnement de la bobine CC2, CC3 par rapport aux bords de la carte C2, C3, si la bobine MC1 peut être disposée avec précision par rapport aux bords de la carte.

Sur la figure 4, la boucle CL22 est allongée suivant l'axe longitudinal X1 de la carte C2. Sur la figure 5, la boucle CL32 est allongée suivant l'axe transversal Y2 de la carte C3. Il peut être noté dans les figures 4 et 5 que le centre I2, I3 de la boucle CL22, CL23 ne coïncide pas avec le centre MI de la bobine MC1. La petite boucle CL22, CL32 présente une forme ovale ou rectangulaire avec des angles arrondis. La bobine MC1 peut également présenter une forme ovale ou rectangulaire avec des angles arrondis.

Par ailleurs, dans l'exemple des figures 4 et 5, la grande boucle CL21, CL31 comporte plusieurs spires et est connectée à la petite boucle CL22, CL32 qui comporte également plusieurs spires. Selon un autre mode de réalisation, la bobine CC2, CC3 comporte plusieurs spires comportant chacune une grande boucle et une petite boucle, chaque grande boucle ayant sensiblement de la forme et des dimensions d'une spire de la grande boucle CL21, CL31, et étant connectée à une petite boucle sensiblement de la forme et des dimensions d'une spire de la petite boucle CL22, CL32.

Les figures 6A, 6B représentent des courbes CB1', CB2 de variation du facteur de couplage inductif CR entre les bobines CC2 ou CC3 et MC1, en fonction de la position de la bobine MC1 suivant l'axe Y1 ou X2 pour la courbe CB1', et suivant l'axe X1 ou Y2 pour la courbe CB2. La courbe CB1' est sensiblement identique à la courbe CB1 de la figure 1A, avec un sommet principal S1 atteint lorsque la bobine MC1 est centrée sur l'axe X1 ou Y2, et des sommets secondaires SI', S1" lorsque la bobine MC1 se trouve en dehors de la boucle CL22, CL32, mais avec une partie en regard de cette dernière. La courbe CB2 présente deux sommets principaux S2, S3 qui sont atteints lorsque l'une ou l'autre des parties de la bobine MC1 s'étendant suivant l'axe Y1 ou X2 se trouve en regard de l'une ou l'autre des parties de la boucle CL22, CL32 s'étendant suivant cet axe Y1 ou X2. Entre les sommets S2 et S3 s'étend une zone de la courbe où le facteur de couplage inductif CR est légèrement inférieur (de 0 à 20%) au facteur de couplage correspondant aux sommets S2, S3. Les sommets S2, S3 sont inférieurs au sommet S1 de la figure 1A. En d'autres termes, la configuration de la boucle CL22, CL32 autorise une marge d'erreur correspondant à la distance entre les sommets S2 et S3, dans le positionnement de la bobine MC1 par rapport à la bobine CC2, CC3, suivant l'axe X1, Y2. En effet, la variation du facteur de couplage inductif CR entre les sommets S2 et S3 reste dans une limite acceptable qui peut être inférieure à 20%. En contrepartie, une baisse du facteur de couplage par rapport à la carte C1 de la figure 1 peut être observée. La courbe CB2 présente également des sommets secondaires de part et d'autre de la zone entre les sommets S2, S3 qui sont atteints lorsque la bobine MC1 se trouve en dehors de la boucle CL22, CL32 avec une partie (verticale sur la figure 4, et horizontale sur la figure 5) en regard de la boucle.

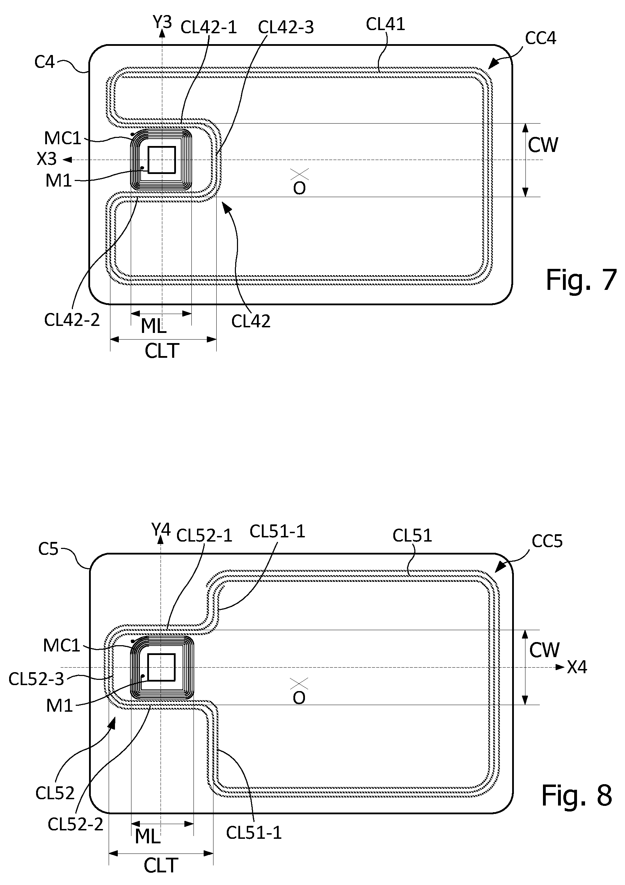

Les figures 7 à 10 représentent des cartes à microcircuit sans contact C4, C5, C6, C7 selon d'autres modes de réalisation. Les cartes C4, C5, C6 comprennent une bobine d'antenne CC4, CC5, CC6, CC7, et le module comprenant le microcircuit M1 connecté à sa bobine d'antenne MC1. Les bobines d'antenne CC4, CC5, CC6, CC7 diffèrent des bobines CC1 et CC2 en ce qu'elles ne comprennent pas de petite boucle, mais une seule grande boucle pouvant être formée de plusieurs spires. Chaque bobine d'antenne CC4, CC5, CC6, CC7 comprend une partie CL41, CL51, CL61, CL71 suivant partiellement le bord de la carte C4, C5, C6, C7 à une certaine distance du bord de la carte, et une partie CL42, CL52, CL62, CL72 suivant partiellement le contour de la bobine MC1, c'est-à-dire située au plus près à une distance de la bobine MC1 inférieure à 5% de la largeur ML de la bobine MC1.

Sur la figure 7, la partie CL42 présente la forme d'un U, comportant deux branches CL42-1, CL42-2 et une base CL42-3 passant entre la bobine MC1 et le centre O de la carte C4. Les branches CL42-1, CL42-2 sont rattachées par leur sommet à la partie CL41 au voisinage du bord de la carte C4 le plus proche de la bobine MC1, s'étendant suivant l'axe transversal Y3 de la carte. La bobine MC1 se trouve donc en dehors de la bobine CC4. L'écartement des branches CL42-1, CL42-2 correspond sensiblement à la largeur ML de la bobine MC1 : les branches CL42-1, CL42-2 sont situées à une distance de la bobine MC1 inférieure à 5% de la largeur ML de la bobine MC1. La longueur CLT des branches CL42-1, CL42-2 est supérieure d'au moins 20% à l'écartement des branches CL42-1, CL42-2, par exemple de 20 à 50% de cet écartement. La longueur CLT des branches CL42-1, CL42-2 peut correspondre ou être supérieure à la somme de la largeur ML de la bobine MC1 et d'une marge d'erreur dans le positionnement de la bobine CC4 par rapport aux bords de la carte C4, et en particulier par rapport aux bords s'étendant suivant l'axe longitudinal Y3 de la carte.

Sur la figure 8, la partie CL51 de la bobine CC5 comprend une partie CL51-1 parallèle à l'axe transversal Y4 de la carte C5, et passant entre la bobine MC1 et le centre O de la carte C5. La partie CL52 de la bobine C5, suivant partiellement le contour de la bobine MC1, présente également la forme d'un U avec deux branches CL52-1, CL52-2 rattachées par leur sommet à la partie CL51-1 passant entre la bobine et le centre O de la carte C5, et une base CL52-3 disposée entre le bord de la carte C5 et la bobine MC1. La bobine MC1 se trouve donc entourée de la bobine CC5. Ici encore, l'écartement des branches CL52-1, CL52-2 correspond sensiblement à la largeur ML de la bobine MC1 : les branches CL52-1, CL52-2 sont situées à une distance de la bobine MC1 inférieure à 5% de la largeur ML de la bobine MC1. La longueur CLT des branches CL52-1, CL52-2 est supérieure d'au moins 20% à l'écartement des branches CL52-1, CL52-2, par exemple de 20 à 50% de cet écartement. La longueur CLT des branches CL52-1, CL52-2 peut correspondre ou être supérieure à la somme de la largeur ML de la bobine MC1 et d'une marge d'erreur dans le positionnement de la bobine CC5 par rapport aux bords de la carte C5, et en particulier par rapport aux bords s'étendant suivant l'axe longitudinal Y4 de la carte.

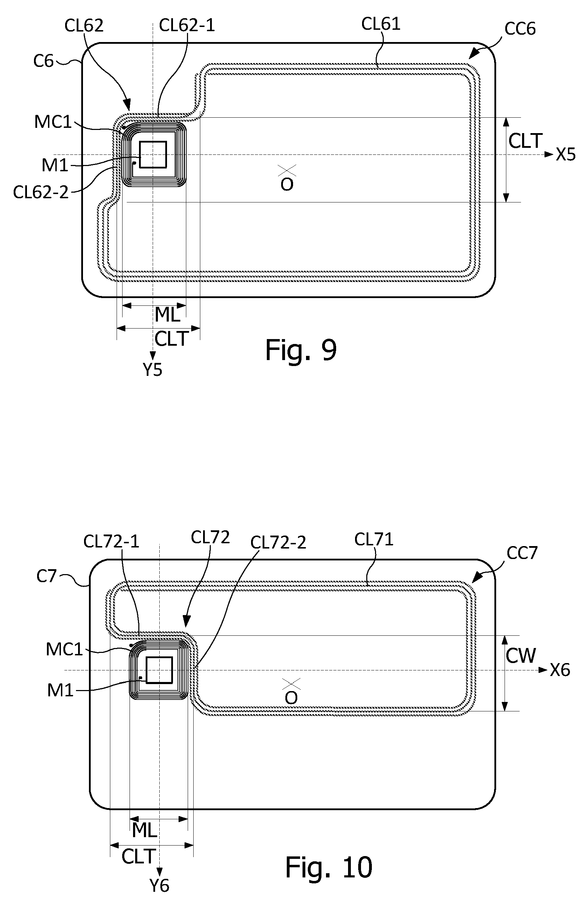

Sur la figure 9, la partie CL61 de la bobine CC6 s'étend le long des bords de la carte C6, à l'exception d'un angle de la carte à proximité de la bobine MC1. La partie CL62 suivant partiellement les contours de la bobine MC1, comprend deux branches adjacentes CL62-1, CL62-2. La branche CL62-1 est parallèle à un bord de la bobine MC1 s'étendant suivant l'axe longitudinal X5 de la carte C6. La branche CL62-2 est parallèle à un bord de la bobine MC1 s'étendant suivant l'axe transversal Y5 de la carte C6 et est disposée entre la bobine MC1 et le bord de la carte le plus proche de la bobine MC1. Les parties CL62-1 et CL62-2 ferment la partie CL61 pour former la bobine CC6. La bobine MC1 se trouve entourée par la bobine CC6. L'une et/ou l'autre des branches CL62-1, CL62-2 est située à une distance de la bobine MC1 inférieure à 5% de la largeur ML de la bobine MC1. L'une et/ou l'autre des branches CL62-1, CL62-2 peut présenter une longueur CLT supérieure d'au moins 20% à la largeur ML de la bobine MC1, par exemple de 20 à 50% de cette largeur. La longueur CLT de l'une et/ou l'autre des branches CL62-1, CL62-2 peut correspondre à somme de la largeur ML de la bobine MC1 et d'une marge d'erreur dans le positionnement de la bobine CC6 par rapport aux bords de la carte C6, et en particulier par rapport aux bords s'étendant suivant l'axe longitudinal X5 (pour la branche CL62-1) et/ou transversal Y5 de la carte (pour la branche CL62-2).

Sur la figure 10, la partie CL71 de la bobine CC5 s'étend le long des bords de la carte C7, à l'exception d'un autre angle de la carte à proximité de la bobine MC1. La partie CL72 suivant partiellement les contours de la bobine MC1, comprend deux branches adjacentes CL72-1, CL72-2. La branche est parallèle à un bord de la bobine MC1 s'étendant suivant l'axe longitudinal X6 de la carte C7. La branche CL72-2 est parallèle à un bord de la bobine MC1 s'étendant suivant l'axe transversal Y6 de la carte C7, et est disposée entre la bobine MC1 et le centre 0 de la carte C7. Les parties CL72-1 et CL72-2 ferment la partie CL71 pour former la bobine CC7. La bobine MC1 se trouve à l'extérieur de la bobine CC7. L'une et/ou l'autre des branches CL72-1, CL72-2 est située à une distance de la bobine MC1 inférieure à 5% de la largeur ML de la bobine MC1. L'une et/ou l'autre des branches CL72-1, CL72-2 peut présenter une longueur CLT supérieure d'au moins 20% à la largeur ML de la bobine MC1, par exemple de 20 à 50% de cette largeur. La longueur CLT de l'une et/ou l'autre des branches CL72-1, CL72-2 peut correspondre à la somme de la largeur ML de la bobine MC1 et d'une marge d'erreur dans le positionnement de la bobine CC7 par rapport aux bords de la carte C7, et en particulier par rapport aux bords s'étendant suivant l'axe longitudinal X6 (pour la branche CL72-1) et/ou transversal Y6 de la carte (pour la branche CL72-2). Dans l'exemple de la figure 10, une partie de la bobine CC7 se trouve éloignée du bord de la carte. La partie de la carte en dehors de la bobine CC7 (ainsi que CC2 et CC3) peut être prévue pour recevoir des inscriptions formées par embossage, telles qu'un numéro de carte, et les noms et prénoms du titulaire de carte.

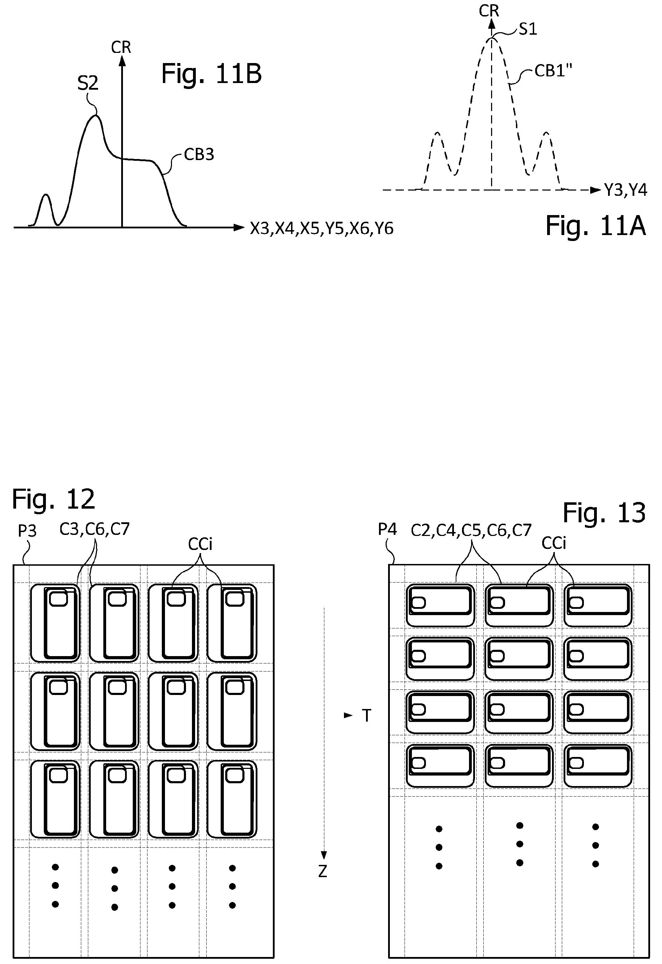

Les figures 11A, 11B représentent des courbes CB1" et CB3 de variation du facteur de couplage inductif CR entre les bobines CC4, CC5, CC6 ou CC7 et MC1, en fonction de la bobine MC1 suivant l'axe Y3 ou Y4 par rapport à la carte, pour la courbe CB1", et suivant l'axe X3, X4, X5, Y5, X6 ou Y6 pour la courbe CB3. La courbe CB1" est sensiblement identique à la courbe CB1 de la figure 1A. La courbe CB3 présente un seul sommet principal S2 qui est atteint lorsque l'une ou l'autre des parties de la bobine MC1 s'étendant suivant l'axe X3, X4, X5, Y5, X6 ou Y6 se trouve en regard de l'une ou l'autre des branches CL42-3, CL52-3, C62-1, CL62-2, CL72-1 ou CL72-2. A droite du sommet S2 s'étend une zone de la courbe où le facteur de couplage inductif CR reste légèrement inférieur (de 0 à 20%) au facteur de couplage correspondant au sommet S2. Le sommet S2 est inférieur au sommet S1 de la figure 1A. En d'autres termes, la configuration des bobines CC4, CC5, CC6, CC7 autorise une marge d'erreur dans le positionnement de la bobine MC1 par rapport à la bobine CC4, CC5, CC6, CC7 suivant l'axe X3, X4, X5, Y5, X6, Y6. Cette marge d'erreur correspond à la plage de positions de la bobine MC1 suivant cet axe, où le facteur de couplage CR reste supérieur à 20% de la valeur de ce facteur au sommet S2. A gauche du sommet S2 se trouve un sommet secondaire qui apparaît lorsque la bobine MC1 a presque complètement changé de situation -à l'intérieur / à l'extérieur par rapport la bobine CC4-CC7, mais avec une partie en regard de la bobine CC4-CC7.

Les parties CL42-3 (figure 7) et CL52-3 (figure 8) peuvent être disposées suffisamment éloignées de la zone susceptible d'être occupée par la bobine d'antenne du microcircuit, afin de ne jamais pouvoir être en regard de cette dernière. De cette manière, le facteur de couplage CR ne présente pas de sommet principal S2, et donc reste sensiblement constant même si la position de la bobine du microcircuit varie par rapport à la bobine de la carte, dans la limite de la marge d'erreur décrite précédemment, dans le positionnement de la bobine du microcircuit par rapport à la bobine de la carte.

Dans les modes de réalisation présentés dans les figures 4, 5 et 7 à 10, la bobine d'antenne de la carte suit seulement une partie du contour de la bobine du microcircuit. Dans les figures 4, 5, 7 et 8, la proportion de la bobine du microcircuit couverte ou suivie par la bobine de la carte représente entre la moitié et les trois-quarts du contour de la bobine du microcircuit, compte-tenu de la marge d'erreur dans le positionnement de la bobine du microcircuit par rapport à la bobine de la carte. Dans les figures 9 et 10, cette proportion est située entre un quart et la moitié du contour de la bobine du microcircuit.

Selon un mode de réalisation, les cartes C2 à C7 sont fabriquées collectivement dans des plaques en résine polymère (PVC, PC ou PET). Ainsi, les figures 12 et 13 représentent des plaques P3, P4 dans lesquelles sont formées collectivement des bobines d'antenne CCi. Les plaques P3, P4 diffèrent des plaques uniquement par la forme des bobines d'antenne de carte et par la manière de les former. Sur la figure 12, les axes longitudinaux X1-X5 des cartes sont parallèles avec l'axe longitudinal Z de la plaque P3. Sur la figure 13, les axes longitudinaux X1-X5 des cartes sont parallèles avec l'axe transversal T de la plaque P4. Sur les figures 12 et 13, les boucles CL22 ou CL32, ou les parties CL42, CL52 sont formées avec leur axe longitudinal X1, Y2, X3, X4 suivant la direction T ou Z ayant la marge d'erreur la plus élevée dans le positionnement des bobines CC2-CC5 et MC1 l'une par rapport à l'autre. Ainsi, si cette marge d'erreur est plus élevée suivant l'axe transversal T que suivant l'axe longitudinal Z des plaques P3, P4, la bobine d'antenne CC3 peut être formée sur la plaque P3, tandis que les bobines CC2, CC4 et CC5 peuvent être formées sur la plaque P4. Les bobines d'antenne CC6 et CC7 peuvent être formées indifféremment sur les plaques P3 et P4.

Selon un mode de réalisation, les bobines CC2 à CC7 sont réalisées collectivement par dépôt sur une plaque (par exemple P3 ou P4) et gravure de deux couches électriquement conductrices et d'une couche électriquement isolante entre les deux couches conductrices, pour former des pistes conductrices qui peuvent se croiser.

Selon un autre mode de réalisation, les bobines CC2 à CC7 sont réalisées collectivement à l'aide d'un fil isolé dans une gaine ou par un verni, qui est enfoncé progressivement dans la carte à l'aide d'ultrasons aptes à faire fondre localement la carte. Le fil isolé est ainsi déroulé en suivant le trajet du fil formant les spires de la bobine à former. Le fil peut présenter un diamètre de 50 à 150 µm. Le pas d'espacement entre les spires peut être de 150 à 500 µm.

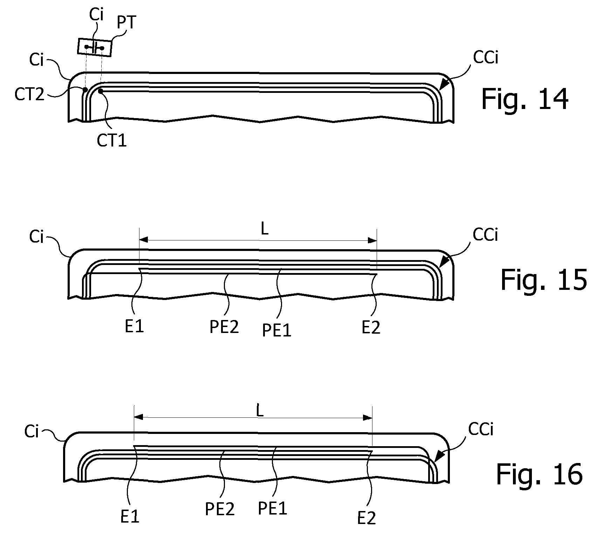

Selon un mode de réalisation, les bobines CC2 à CC7 sont refermées sur elles-mêmes pour former un circuit fermé, par un condensateur dont la capacité est choisie pour accorder la bobine sur la fréquence de résonance souhaitée. La figure 14 représente une partie de la carte Ci (i = 2, 3, 4, 5, 6 ou 7) avec une partie de la bobine d'antenne CCi (i = 2, 3, 4, 5, 6 ou 7) de la carte. Les extrémités de la piste conductrice ou du fil formant la bobine comprennent des plages de contact CT1, CT2 permettant de connecter un condensateur C formé sur une plaquette PT. Les bobines CC4 à CC7 peuvent ainsi être formées sans croisements, le condensateur C assurant la fermeture du circuit de la bobine. Les bobines CC4 à CC7 peuvent donc être formées par gravure d'une seule couche électriquement conductrice.

Selon un autre mode de réalisation, les bobines CC2 à CC7 ne sont pas refermées sur elles-mêmes, mais présentent des parties d'extrémité formant un condensateur. Les figures 15 et 16 représentent une partie de la carte Ci (i = 2, 3, 4, 5, 6 ou 7) et en particulier les parties d'extrémité PE1, PE2 du fil ou de la piste conductrice formant la bobine CCi (i = 2, 3, 4, 5, 6 ou 7). Les parties d'extrémité PE1, PE2 sont disposées parallèlement l'une à l'autre et en regard l'une de l'autre sur une certaine longueur L, et forment ainsi les électrodes d'un condensateur. La longueur L représente ainsi la distance entre les deux extrémités E1, E2 du fil ou de la piste conductrice formant la bobine CCi. La capacité du condensateur ainsi formé et donc la fréquence de résonance de la bobine CCi, peut ainsi être réglée en ajustant la longueur L, compte tenu de l'écartement des parties PE1, PE2, et de l'épaisseur de chacune des parties PE1, PE2. Sur la figure 15, les parties PE1, PE2 sont situées à l'intérieur de la bobine CCi, tandis que sur la figure 16, elles sont situées à l'extérieur de la bobine CCi. Il peut être souhaitable de maximiser la taille de la bobine CCi. Dans ce cas, il est préférable de former le condensateur (PE1, PE2) à l'intérieur de la bobine CCi comme illustré par la figure 15.

Il apparaîtra clairement à l'homme de l'art que la présente invention est susceptible de diverses variantes de réalisation et diverses applications. En particulier, l'invention n'est pas limitée aux formes de bobines d'antenne de carte ou de microcircuit présentées, mais peut s'appliquer à d'autres formes, dès lors que la bobine d'antenne de carte comporte une partie proche du bord de la carte et que la bobine d'antenne du microcircuit présente une partie proche et une partie plus éloignée de la bobine d'antenne de la carte. L'invention n'est pas non plus limitée aux cartes ayant le format défini par la norme ISO 7816.

Par ailleurs, la formation du condensateur d'accord à l'aide des électrodes PA1, PA2 peut être appliquée à n'importe quelle carte à microcircuit comportant une antenne de carte couplée par induction avec une antenne connectée au microcircuit, ou directement connectée au microcircuit.

## Revendications

1. Procédé de fabrication d'une carte à microcircuit, comprenant des étapes consistant à :
former une première bobine d'antenne (CC2-CC7) dans une carte (C2-C6), la première bobine d'antenne comportant une partie (CL21-CL71) suivant le bord de la carte,
former un module comportant un microcircuit (M1) et une seconde bobine d'antenne (MC1) disposée autour et connectée au microcircuit, et
implanter le module dans la carte en une position précise par rapport au bord de la carte, la première bobine d'antenne étant couplée par induction à la seconde bobine d'antenne,
**caractérisé en ce que** la première bobine d'antenne (CC2-CC7) est conformée de manière à ce que seulement une partie de la seconde bobine d'antenne (MC1) soit à une distance de la première bobine d'antenne inférieure à 5% de la largeur (ML) de la seconde bobine d'antenne.

2. Procédé selon la revendication 1, dans lequel la première bobine d'antenne (CC2-CC7) est formée par dépôt et gravure d'une couche électriquement conductrice, ou deux couches électriquement conductrices séparées par une couche électriquement isolante.

3. Procédé selon la revendication 1, dans lequel la première bobine d'antenne (CC2-CC7) est formée en implantant un fil isolé dans la carte à l'aide d'ultrasons.

4. Procédé selon l'une des revendications 1 à 3, dans lequel la première bobine d'antenne (CC2-CC3) comprend une grande boucle (CL21, CL31) conformée pour suivre partiellement le bord de la carte (C2, C3), et une petite boucle (CL22, CL32) comprenant deux premières parties opposées (CL22-1, CL32-1) suivant seulement une partie du bord de la seconde bobine d'antenne (MC1) à une distance inférieure à 5% de la largeur (ML) de la seconde bobine d'antenne, et deux secondes parties opposées (CL22-2, CL32-2) espacées l'une de l'autre d'une distance (CLT) supérieure d'au moins 20% à la distance (CW) entre les premières parties opposées.

5. Procédé selon l'une des revendications 1 à 3, dans lequel la première bobine d'antenne (CC4, CC5) comprend deux branches parallèles (CL42-1, CL42-2, CL52-1, CL52-2) situées à une distance de la seconde bobine d'antenne (MC1) inférieure à 5% de la largeur (ML) de la seconde bobine d'antenne.

6. Procédé selon l'une des revendications 4 et 5, dans lequel la première bobine d'antenne (CC2-CC5) comprend une autre partie (CL22-2, CL32-2, CL42-3, CL52-3) susceptible d'être situé à une distance de la seconde bobine d'antenne (MC1) inférieure à 5% de la largeur (ML) de la seconde bobine d'antenne, compte tenu d'une marge d'erreur dans le positionnement des première et seconde bobines d'antenne, l'une par rapport à l'autre.

7. Procédé selon l'une des revendications 1 à 3, dans lequel la première bobine d'antenne (CC6, CC7) comprend deux branches (CL62-1, CL62-2, CL72-1, CL72-2) adjacentes, susceptibles d'être à une distance de la seconde bobine d'antenne (MC1) inférieure à 5% de la largeur (ML) de la seconde bobine d'antenne, compte tenu d'une marge d'erreur dans le positionnement des première et seconde bobines d'antenne, l'une par rapport à l'autre.

8. Procédé selon l'une des revendications 1 à 7, comprenant une étape de formation d'un condensateur d'accord (C) de la première bobine d'antenne (CC2-CC7), le condensateur d'accord comprenant deux parties d'extrémité (PE1, PE2) de fil ou de piste conductrice formant la bobine d'antenne, disposées en regard l'une de l'autre, soit à l'intérieur, soit à l'extérieur de la première bobine d'antenne.

9. Procédé de fabrication collective de cartes à microcircuit, comprenant plusieurs exécutions du procédé selon l'une des revendications 1 à 8, pour former plusieurs antennes de carte (CC2-CC7) sur une plaque (P3, P4), et une étape de découpage de la plaque pour obtenir des cartes comportant chacune une bobine d'antenne de carte, l'étape d'implantation d'un microcircuit (M1) avec sa bobine d'antenne (MC1) étant effectuée dans chaque carte une fois individualisée.

10. Procédé selon la revendication 9, dans lequel les antennes de carte sont réparties dans la plaque (P3, P4) en rangées et en colonnes, de plusieurs antennes de carte.

11. Carte à microcircuit comprenant :
une carte (C2-C6),
une première bobine d'antenne (CC2-CC7) implantée dans la carte, et comportant une partie (CL21-CL61) suivant le bord de la carte, et
un module comprenant un microcircuit (MC1) et une seconde bobine d'antenne (MC1) disposée autour et connectée au microcircuit, le module étant implanté dans la carte en une position précise par rapport au bord de la carte,
**caractérisé en ce que** la première bobine d'antenne (CC2-CC7) est conformée de manière à ce que seulement une partie de la seconde bobine d'antenne (MC1) soit à une distance de la première bobine d'antenne inférieure à 5% de la largeur (ML) de la seconde bobine d'antenne.

12. Carte à microcircuit selon la revendication 11, dans laquelle la première bobine d'antenne (CC2-CC3) comprend une grande boucle (CL21, CL31) conformée pour suivre partiellement le bord de la carte (C2, C3), et une petite boucle (CL22, CL32) comprenant deux premières parties opposées (CL22-1, CL32-1) suivant seulement une partie du bord de la seconde bobine d'antenne (MC1) à une distance inférieure à 5% de la largeur (ML) de la seconde bobine d'antenne, et deux secondes parties opposées (CL22-2, CL32-2) espacées l'une de l'autre d'une distance (CLT) supérieure d'au moins 20% à la distance (CW) entre les premières parties opposées.

13. Carte à microcircuit selon la revendication 11, laquelle la première bobine d'antenne (CC4, CC5) comprend deux branches parallèles (CL42-1, CL42-2, CL52-1, CL52-2) situées à une distance de la seconde bobine d'antenne (MC1) inférieure à 5% de la largeur (ML) de la seconde bobine d'antenne.

14. Carte à microcircuit selon l'une des revendications 12 et 13, dans laquelle la première bobine d'antenne (CC2-CC5) comprend une autre partie (CL22-2, CL32-2, CL42-3, CL52-3) susceptible d'être une distance de la seconde bobine d'antenne (MC1) inférieure à 5% de la largeur (ML) de la seconde bobine d'antenne, compte tenu d'une marge d'erreur dans le positionnement des première et seconde bobines d'antenne, l'une par rapport à l'autre.

15. Carte à microcircuit selon la revendication 11, dans laquelle la première bobine d'antenne (CC6, CC7) comprend deux branches (CL62-1, CL62-2, CL72-1, CL72-2) adjacentes, susceptibles d'être à une distance de la seconde bobine d'antenne (MC1) inférieure à 5% de la largeur (ML) de la seconde bobine d'antenne, compte tenu d'une marge d'erreur dans le positionnement des première et seconde bobines d'antenne, l'une par rapport à l'autre.

16. Carte à microcircuit selon l'une des revendications 11 à 15, comprenant un condensateur d'accord (C) de la première bobine d'antenne (CC2-CC7), le condensateur d'accord comprenant deux parties d'extrémité (PA1, PA2) de fil ou de piste conductrice formant la bobine d'antenne, disposées en regard l'une de l'autre, soit à l'intérieur, soit à l'extérieur de la première bobine d'antenne.

## Patentansprüche

1. Verfahren zum Herstellen einer Mikroschaltungskarte, umfassend Schritte, die darin bestehen:
eine erste Antennenspule (CC2-CC7) in einer Karte (C2-C6) zu bilden, wobei die erste Antennenspule einen Abschnitt (CL21-CL71) aufweist, der entlang dem Rand der Karte läuft,
ein Modul zu bilden, das eine Mikroschaltung (M1) und eine zweite Antennenspule (MC1) aufweist, die um die Mikroschaltung herum angeordnet und mit ihr angeschlossen ist, und
das Modul in die Karte an eine genaue Position in Bezug auf den Kartenrand zu implantieren, wobei die erste Antennenspule mit der zweiten Antennenspule induktiv gekoppelt wird,
**dadurch gekennzeichnet, dass** die erste Antennenspule (CC2-CC7) derart gestaltet ist, dass nur ein Teil der zweiten Antennenspule (MC1) sich in einem Abstand von der ersten Antennenspule befindet, der kleiner ist als 5% der Breite (ML) der zweiten Antennenspule.

2. Verfahren nach Anspruch 1, bei dem die erste Antennenspule (CC2-CC7) durch Abscheidung und Ätzen einer elektrisch leitenden Schicht, oder zweier durch eine elektrisch isolierende Schicht getrennten elektrisch leitenden Schichten gebildet wird.

3. Verfahren nach Anspruch 1, bei dem die erste Antennenspule (CC2-CC7) gebildet wird, indem ein isolierter Draht in die Karte mit Hilfe von Ultraschall implantiert wird.

4. Verfahren nach einem der Ansprüche 1 bis 3, bei dem die erste Antennenspule (CC2-CC3) eine große Schleife (CL21, CL31) umfasst, die derart gestaltet ist, dass sie teilweise entlang dem Rand der Karte (C2, C3) läuft, und eine kleine Schleife (CL22, CL32) umfassend zwei erste gegenüberliegende Abschnitte (CL22-1, CL32-1), die nur entlang einem Teil des Rands der zweiten Antennenspule (MC1) in einem Abstand laufen, der kleiner ist als 5% der Breite (ML) der zweiten Antennenspule, und zwei zweite gegenüberliegende Abschnitte (CL22-2, CL32-2), die voneinander um einen Abstand (CLT) beabstandet sind, der um wenigstens 20% grösser ist als der Abstand (CW) zwischen den ersten gegenüberliegenden Abschnitten.

5. Verfahren nach einem der Ansprüche 1 bis 3, bei dem die erste Antennenspule (CC4, CC5) zwei parallele Zweige (CL42-1, CL42-2, CL52-1, CL52-2) umfasst, die sich in einem Abstand von der zweiten Antennenspule (MC1) befinden, der kleiner ist als 5% der Breite (ML) der zweiten Antennenspule.

6. Verfahren nach einem der Ansprüche 4 und 5, bei dem die erste Antennenspule (CC2-CC5) einen anderen Abschnitt (CL22-2, CL32-2, CL42-3, CL52-3) umfasst, der sich unter Berücksichtigung einer Fehlergrenze beim Positionieren der ersten und zweiten Antennenspulen relativ zueinander in einem Abstand von der zweiten Antennenspule (MC1) befinden kann, der kleiner ist als 5% der Breite (ML) der zweiten Antennenspule.

7. Verfahren nach einem der Ansprüche 1 bis 3, bei dem die erste Antennenspule (CC6, CC7) zwei benachbarte Zweige (CL62-1, CL62-2, CL72-1, CL72-2) umfasst, die sich unter Berücksichtigung einer Fehlergrenze beim Positionieren der ersten und zweiten Antennenspulen relativ zueinander in einem Abstand von der zweiten Antennenspule (MC1) befinden können, der kleiner ist als 5% der Breite (ML) der zweiten Antennenspule.

8. Verfahren nach einem der Ansprüche 1 bis 7, umfassend einen Schritt der Bildung eines Abstimmkondensators (C) zum Abstimmen der ersten Antennenspule (CC2-CC7), wobei der Abstimmkondensator zwei Endabschnitte (PE1, PE2) eines oder einer die Antennenspule bildenden Drahtes oder Leiterbahn umfasst, die einander gegenüberstehend entweder innerhalb, oder außerhalb der ersten Antennenspule angeordnet sind.

9. Verfahren zum kollektiven Herstellen von Mikroschaltungskarten, umfassend mehrere Durchführungen des Verfahrens nach einem der Ansprüche 1 bis 8, um mehrere Kartenantennen (CC2-CC7) auf einer Leiterplatte (P3, P4) zu bilden, und einen Schritt des Ausschneidens der Leiterplatte, um Karten zu erhalten, die je eine Kartenantennenspule aufweisen, wobei der Schritt des Implantierens einer Mikroschaltung (M1) zusammen mit ihrer Antennenspule (MC1) in jede Karte nach Individualisierung derselben ausgeführt wird.

10. Verfahren nach Anspruch 9, bei dem die Kartenantennen in der Leiterplatte (P3, P4) in Reihen und Spalten von mehreren Kartenantennen verteilt sind.

11. Mikroschaltungskarte umfassend:
eine Karte (C2-C6),
eine erste Antennenspule (CC2-CC7), die in der Karte implantiert ist und die einen Abschnitt (CL21-CL61) aufweist, der entlang dem Rand der Karte läuft, und
ein Modul umfassend eine Mikroschaltung (MC1) und eine zweite Antennenspule (MC1), die um die Mikroschaltung herum angeordnet und mit ihr angeschlossen ist, wobei das Modul in der Karte an einer genauen Position in Bezug auf den Kartenrand implantiert ist,
**dadurch gekennzeichnet, dass** die erste Antennenspule (CC2-CC7) derart gestaltet ist, dass nur ein Teil der zweiten Antennenspule (MC1) sich in einem Abstand von der ersten Antennenspule befindet, der kleiner ist als 5% der Breite (ML) der zweiten Antennenspule.

12. Mikroschaltungskarte nach Anspruch 11, bei der die erste Antennenspule (CC2-CC3) eine große Schleife (CL21, CL31) umfasst, die derart gestaltet ist, dass sie teilweise entlang dem Rand der Karte (C2, C3) läuft, und eine kleine Schleife (CL22, CL32) umfassend zwei erste gegenüberliegende Abschnitte (CL22-1, CL32-1), die nur entlang einem Teil des Rands der zweiten Antennenspule (MC1) in einem Abstand laufen, der kleiner ist als 5% der Breite (ML) der zweiten Antennenspule, und zwei zweite gegenüberliegende Abschnitte (CL22-2, CL32-2), die voneinander um einen Abstand (CLT) beabstandet sind, der um wenigstens 20% grösser ist als der Abstand (CW) zwischen den ersten gegenüberliegenden Abschnitten.

13. Mikroschaltungskarte nach Anspruch 11, bei der die erste Antennenspule (CC4, CC5) zwei parallele Zweige (CL42-1, CL42-2, CL52-1, CL52-2) umfasst, die sich in einem Abstand von der zweiten Antennenspule (MC1) befindet, der kleiner ist als 5% der Breite (ML) der zweiten Antennenspule.

14. Mikroschaltungskarte nach einem der Ansprüche 12 und 13, bei der die erste Antennenspule (CC2-CC5) einen anderen Abschnitt (CL22-2, CL32-2, CL42-3, CL52-3) umfasst, der sich unter Berücksichtigung einer Fehlergrenze beim Positionieren der ersten und zweiten Antennenspulen relativ zueinander in einem Abstand von der zweiten Antennenspule (MC1) befinden kann, der kleiner ist als 5% der Breite (ML) der zweiten Antennenspule.

15. Mikroschaltungskarte nach Anspruch 11, bei der die erste Antennenspule (CC6, CC7) zwei benachbarte Zweige (CL62-1, CL62-2, CL72-1, CL72-2) umfasst, die sich unter Berücksichtigung einer Fehlergrenze beim Positionieren der ersten und zweiten Antennenspulen relativ zueinander in einem Abstand von der zweiten Antennenspule (MC1) befinden können, der kleiner ist als 5% der Breite (ML) der zweiten Antennenspule.

16. Mikroschaltungskarte nach einem der Ansprüche 11 bis 15, umfassend einen Abstimmkondensator (C) zum Abstimmen der ersten Antennenspule (CC2-CC7), wobei der Abstimmkondensator zwei Endabschnitte (PA1, PA2) eines oder einer die Antennenspule bildenden Drahtes oder Leiterbahn umfasst, die einander gegenüberstehend entweder innerhalb, oder außerhalb der ersten Antennenspule angeordnet sind.

## Claims

1. A method for manufacturing a microcircuit card, comprising steps of:
forming a first antenna coil (CC2-CC7) in a card (C2-C6), the first antenna coil comprising a part (CL21-CL71) following the edge of the card,
forming a module comprising a microcircuit (M1) and a second antenna coil (MC1) disposed around and connected to the microcircuit, and
implanting the module into the card at a precise position in relation to the edge of the card, the first antenna coil being coupled by induction to the second antenna coil,
**characterized in that** the first antenna coil (CC2-CC7) is pre-formed in such a way that only one part of the second antenna coil (MC1) is at a distance from the first antenna coil of less than 5% of the width (ML) of the second antenna coil.

2. Method according to claim 1, wherein the first antenna coil (CC2-CC7) is formed by depositing and etching an electrically conducting layer, or two electrically conducting layers separated by an electrically insulating layer.

3. Method according to claim 1, wherein the first antenna coil (CC2-CC7) is formed by implanting an insulated wire into the card using ultrasounds.

4. Method according to one of claims 1 to 3, wherein the first antenna coil (CC2-CC3) comprises a large loop (CL21, CL31) pre-formed to partially follow the edge of the card (C2, C3), and a small loop (CL22, CL32) comprising two first opposite parts (CL22-1, CL32-1) following only one part of the edge of the second antenna coil (MC1) at a distance of less than 5% of the width (ML) of the second antenna coil, and two second opposite parts (CL22-2, CL32-2) spaced out from one another by a distance (CLT) at least 20% greater than the distance (CW) between the first opposite parts.

5. Method according to one of claims 1 to 3, wherein the first antenna coil (CC4, CC5) comprises two parallel branches (CL42-1, CL42-2, CL52-1, CL52-2) located at a distance from the second antenna coil (MC1) of less than 5% of the width (ML) of the second antenna coil.

6. Method according to one of claims 4 and 5, wherein the first antenna coil (CC2-CC5) comprises another part (CL22-2, CL32-2, CL42-3, CL52-3) susceptible of being located at a distance from the second antenna coil (MC1) of less than 5% of the width (ML) of the second antenna coil, given an error margin in the positioning of the first and second antenna coils in relation to each other.

7. Method according to one of claims 1 to 3, wherein the first antenna coil (CC6, CC7) comprises two adjacent branches (CL62-1, CL62-2, CL72-1, CL72-2), susceptible of being at a distance from the second antenna coil (MC1) of less than 5% of the width (ML) of the second antenna coil, given an error margin in the positioning of the first and second antenna coils in relation to each other.

8. Method according to one of claims 1 to 7, comprising a step of forming a tuning capacitor (C) for tuning the first antenna coil (CC2-CC7), the tuning capacitor comprising two end parts (PE1, PE2) of wire or conducting path forming the antenna coil, disposed opposite one another, either inside or outside the first antenna coil.

9. A method for collectively manufacturing microcircuit cards, comprising several executions of the method according to one of claims 1 to 8, to form several card antenna coils (CC2-CC7) on a board (P3, P4), and a step of cutting the board to obtain cards each comprising a card antenna coil, the step of implanting a microcircuit (M1) with its antenna coil (MC1) being performed in each card once individualized.

10. Method according to claim 9, wherein the card antenna coils are distributed in the board (P3, P4) in rows and columns of several card antenna coils.

11. A microcircuit card comprising:
a card (C2-C6),
a first antenna coil (CC2-CC7) implanted into the card, and comprising a part (CL21-CL61) following the edge of the card, and
a module comprising a microcircuit (MC1) and a second antenna coil (MC1) disposed around and connected to the microcircuit, the module being implanted into the card at a precise position in relation to the edge of the card,
**characterized in that** the first antenna coil (CC2-CC7) is pre-formed in such a way that only one part of the second antenna coil (MC1) is at a distance from the first antenna coil of less than 5% of the width (ML) of the second antenna coil.

12. Microcircuit card according to claim 11, wherein the first antenna coil (CC2-CC3) comprises a large loop (CL21, CL31) pre-formed to partially follow the edge of the card (C2, C3), and a small loop (CL22, CL32) comprising two first opposite parts (CL22-1, CL32-1) following only one part of the edge of the second antenna coil (MC1) at a distance of less than 5% of the width (ML) of the second antenna coil, and two second opposite parts (CL22-2, CL32-2) spaced out from one another by a distance (CLT) at least 20% greater than the distance (CW) between the first opposite parts.

13. Microcircuit card according to claim 11, wherein the first antenna coil (CC4, CC5) comprises two parallel branches (CL42-1, CL42-2, CL52-1, CL52-2) located at a distance from the second antenna coil (MC1) of less than 5% of the width (ML) of the second antenna coil.

14. Microcircuit card according to one of claims 12 and 13, wherein the first antenna coil (CC2-CC5) comprises another part (CL22-2, CL32-2, CL42-3, CL52-3) susceptible of being at a distance from the second antenna coil (MC1) of less than 5% of the width (ML) of the second antenna coil, given an error margin in the positioning of the first and second antenna coils in relation to each other.

15. Microcircuit card according to claim 11, wherein the first antenna coil (CC6, CC7) comprises two adjacent branches (CL62-1, CL62-2, CL72-1, CL72-2), susceptible of being at a distance from the second antenna coil (MC1) of less than 5% of the width (ML) of the second antenna coil, given an error margin in the positioning of the first and second antenna coils in relation to each other.

16. Microcircuit card according to one of claims 11 to 15, comprising a tuning capacitor (C) for tuning the first antenna coil (CC2-CC7), the tuning capacitor comprising two end parts (PA1, PA2) of wire or conducting path forming the antenna coil, disposed opposite one another, either inside or outside the first antenna coil.
